# EUROPÄISCHE PATENTSCHRIFT

(11) **EP 3 124 204 B1**
(45) Veröffentlichungstag und Bekanntmachung des Hinweises auf die Patenterteilung: **10.06.2020**
(21) Anmeldenummer: 16001676.2
(22) Anmeldetag: 29.07.2016
(51) Int. Cl.: B29C 51/42, B29C 35/04, B29C 51/28, B29C 51/10

(54) **FORMEINRICHTUNG ZUR THERMISCHEN UMFORMUNG VON BAUTEILEN**
MOULDING DEVICE FOR THERMAL REFORMING OF COMPONENTS
MOULE DESTINE A LA DEFORMATION THERMIQUE DE COMPOSANTS

(30) Priorität: 31.07.2015 DE 102015112641
(43) Veröffentlichungstag der Anmeldung: 01.02.2017
(73) Patentinhaber: Nabuurs Developing S.L., 46113 Moncada (ES)
(72) Erfinder: Nabuurs, Anton, 46110 Godella (Valencia) (ES)
(74) Vertreter: Deters, Frank

(56) Entgegenhaltungen:
- EP-A1- 0 731 759
- DE-U1- 9 307 066
- FR-A1- 2 421 719
- FR-A1- 2 458 372
- US-A- 3 048 383
- US-A- 3 258 813
- US-A- 3 624 806
- US-A1- 2006 233 908
- US-B1- 6 443 721

## Beschreibung

Die Erfindung betrifft eine Formeinrichtung zur thermischen Umformung von insbesondere als thermoformbare Halbzeuge bereitgestellten Bauteilen gemäß dem Oberbegriff des Anspruchs 1.

Im Zusammenhang mit einem Vakuumtiefziehverfahren gemäß DE 1 183 353 ist eine Vorrichtung bekannt, bei der die Werkstücke in einer verschließbaren und evakuierbaren Kammer auf ein Trägermaterial aufgebracht werden. Aus DE 297 13 665 U1 ist eine Vorrichtung zum thermischen Formen von Kunststofffolien bekannt, wobei diese eine Heizeinrichtung aufweist, mittels der während des Formens die Kunststofffolie beheizt werden kann. Auch bei einem Verfahren gemäß DE 1 429 041 wird bei einem Vakuumformverfahren eine Folie durch Erhitzen erweicht und in diesem Zustand umgeformt.

Aus EP 0 450 482 A2 ist eine kombinierte Vorrichtung bekannt, bei der eine Heizstation mit zwei Heizplatten vorgesehen ist. Vor einem Verformungsvorgang im Bereich der Heizstation werden die als Halbzeug vorliegenden Bauteile in einer zusätzlichen Formstation aufgenommen und hier in einer Ober- und Unterform verpresst. Ausgehend von diesem Verfahren mit einer zusätzlichen Formstation ist bei einer Konstruktion gemäß EP 1 410 895 B1 vorgesehen, dass die Formstation als Heizeinrichtung mit zwei plattenförmigen Heizelementen zum Vortemperieren des zu formenden Materials unterhalb der Vakuumformeinrichtung angeordnet wird. Damit ist das aus EP 0 450 482 A2 bekannte und zwei nebeneinander befindliche Vorrichtungen aufweisende System nunmehr in einem Maschinengestell vereinigt. Hier sind die plattenförmigen Heizelemente zum Vortemperieren mit einer Schublade kombiniert. In deren Bereich wird ein offenes System gebildet, bei dem ungleichmäßige Erwärmungen der zwischen den Heizplatten befindlichen Halbzeuge auftreten können.

Gemäß DE 93 07 066 U1 wird ein Wärmeschrank für den Prothesenbau vorgeschlagen. Dabei wird eine zum Tiefziehen vorgesehene Kunststoffplatte oberhalb eines Tiefzieheinsatzes so positioniert, dass ein vertikal durch diesen hindurchgeführter Wärmeluftstrom die Kunststoffplatte erwärmt. Durch jeweilige Gebläse im Nahbereich des Tiefzieheinsatzes wird die aufsteigende Warmluft so gesteuert, dass einer ungewollten Verlagerung der Platte durch Schwerkraftwirkung entgegengewirkt wird und damit ungleichmäßige Wandstärken vermieden werden.

Die Erfindung befasst sich mit dem Problem, eine Formeinrichtung zur thermischen Umformung von Bauteilen zu schaffen, die im Bereich einer die zur Verarbeitung vorbereiteten Halbzeuge aufnehmenden Ablage mit Heizzone eine energiesparende Vorwärmung mit verbesserter Heizleistung aufweist und dabei der im Bereich der Ablage vorhandene Nutzraum die Aufnahme größenvariabler Halbzeuge in gleichmäßig temperierbaren Heizzonen ermöglicht.

Die Erfindung löst diese Aufgabe mit einer Formeinrichtung mit den Merkmalen des Anspruchs 1. Weitere vorteilhafte Ausgestaltungen ergeben sich aus den Ansprüchen 2 bis 13.

Ausgehend von bekannten Formeinrichtungen zur Umformung von thermoverformbaren Halbzeugen, die im Bereich eines Maschinengestells mit einer an diesem gehaltenen beheizbaren Schublade als Ablage für vorzuwärmende Halbzeuge versehen sind, ist die erfindungsgemäß verbesserte Formeinrichtung im Bereich ihrer verlagerbaren Ablage mit einer Heizkammer versehen, in deren Bereich optimierbare Heizbedingungen erzeugbar sind. Dazu ist vorgesehen, dass die Heizkammer dieser Formeinrichtung mit zumindest einer eine ausrichtbare Heizluftströmung erzeugenden und zumindest einer Heizzone der Kammer zuführenden Heizeinrichtung kombiniert wird und dabei die im Bereich der Heizkammer horizontal angeordnete Ablage in variabel wählbaren Einbaulagen positionierbar ist, wobei zumindest eine obere und zumindest eine untere Teilkammer gebildet sind. Zur Erzeugung einer weitgehend beliebig ausrichtbaren Heizluftströmung ist diesen beiden Teilkammern zumindest ein Konvektionsheizgerät als Heizeinrichtung zugeordnet. Damit wird im Bereich der vollständig verschließbaren Heizkammer eine funktionale Einheit geschaffen, die unter Ausnutzung der auch mit einer turbulenten Ausrichtung erzeugbaren Heizluftströmung energieeffizient einsetzbar ist. In der Heizphase ist ein effizienter "Heizluftkreislauf" möglich, so dass mit werkstückspezifisch wählbaren Umlufttemperaturen das auf der Ablage befindliche Halbzeug gleichmäßig und vollständig erwärmt wird. Diese Ablage ist vorzugsweise als eine Schublade o. dgl. verlagerbare Tragstruktur ausgebildet. Zum Erreichen eines optimalen "Heizkreislaufs" der umgewälzten Warmluft ist das zumindest eine Konvektionsheizgerät mit jeweils zumindest einem in die obere bzw. die untere Teilkammer einmündenden Vorlaufkanal sowie einem entsprechend ausmündenden Rücklaufkanal versehen.

Die erfindungsgemäße Struktur im Bereich der Heizkammer sieht vor, dass im Bereich ihrer beiden, jeweils an das Maschinengestell angrenzenden Seitenflächen mit zumindest jeweils einem der in die jeweilige Teilkammer einmündenden Konvektionsheizgeräte versehen ist. Denkbar ist auch, hier mehrere Heizgeräte nebeneinander anzuordnen oder zusätzliche Leitkanäle im Bereich der Querseitenwände anzuordnen.

Diese beiden an den Seitenflächen der Heizkammer nahezu "spiegelbildlich" anzuordnenden Konvektionsheizgeräte sind konstruktiv so aufeinander abgestimmt, dass damit eine komplexe Heizeinheit für auch in der Größe variable Heizkammern gebildet wird. Die beiden Konvektionsheizgeräte weisen - in Bezug zur oberen Stützfläche der Ablage - höhenversetzt unterhalb und oberhalb der Schublade zu den jeweiligen Teilkammern hin ausmündende Vorlaufkanäle für die im Bereich jeweils zumindest eines Heizelementes zu erwärmende Förderluft auf. Dabei wird mittels jeweiliger einstellbarer auslassseitiger Leitkanäle eine jeweilige Strömungsrichtung in die Teilkammern hinein vorgegeben. Aus diesen wird die im "Kreislauf" geführte Heizluftströmung über jeweilige Rücklaufkanäle wieder in den Bereich der Heizelemente der Konvektionsheizgeräte angesaugt. Damit ist in der Heizkammer eine Querströmung so ausgerichtet, dass bei geringen Wärmeverlusten eine effiziente Aufheizung der Halbzeuge erreicht wird.

Hierdurch wird mit den beiden Teilkammern - durch eine entsprechende Strömungsverbindung - eine gezielt "umlaufende" Heizluftströmung realisiert, wobei im Bereich des zumindest einen Konvektionsheizgerätes eine senkrecht oder parallel zur Stützfläche der Ablage ausrichtbare Strömungsrichtung vorgegeben werden kann.

Das Heizsystem ist dabei so konzipiert, dass im Bereich der Heizkammer die Entstehung von ungewollten "Hitzepunkten" (so genannten Hotspots) vermieden wird. Vielmehr ist eine gleichmäßige Temperaturverteilung vorgesehen, so dass die zur Erwärmung positionierten Kunststoff-Halbzeuge mittels der Luftströmung aus den Querstromventilatoren homogen aufgeheizt werden.

Die zur Weiterbearbeitung in einer vorzugsweise in das System integrierten Formvorrichtung aufzuheizenden Halbzeuge werden oberhalb der eine variable Stützfläche bildenden Ablage so positioniert, dass in diesem Bereich die in die Heizkammer einströmende Heizluftströmung diese Teilkammer entsprechend aufheizt. Es versteht sich, dass dabei die zumindest eine Heizluftströmung zumindest eine quer und/oder längs zu einer von der Ablage definierten Längsmittelebene ausrichtbare Strömungsrichtung aufweisen kann. Ebenso ist denkbar, dass die Strömungsrichtung durch Leitelemente zumindest bereichsweise mit einer turbulenten oder wirbelförmigen Komponente abgelenkt ist.

Eine weitere Ausführung sieht vor, dass die Heizkammer auch in mehr als die zwei mit zumindest dem einen Konvektionsheizgerät beheizbare Teilkammern unterteilt sein kann.

Eine optimale Ausführung des die Kombination von Formvorrichtung und Heizkammer aufnehmenden Maschinengestells sieht vor, dass in dessen Bereich das zumindest eine - in eine jeweilige Teilkammer gerichtete - Konvektionsheizgerät wahlweise auch an eine oder mehrere der Teilkammern anschließbar ist. Dabei kann das Gesamtsystem baukastenartig so aufgebaut werden, dass sämtliche Komponenten einschließlich dem Konvektionsheizgerät lösbar mit dem Maschinengestell verbunden sind. Damit ist eine Montage oder Trennung der Baugruppen in variabler Anzahl und Lage denkbar.

Eine optimale Positionierung des zumindest einen Konvektionsheizgerätes sieht vor, dass dieses an einem zur Längsmittelebene der Einrichtung parallelen Außenrand des Maschinengestells positioniert wird. Damit wird in bevorzugter Ausführung eine Struktur zur Umlufteinleitung geschaffen, bei der im Bereich der Schublade eine Heizluftströmung in Querrichtung zu deren in der Verlagerungsrichtung verlaufender Längsmittelebene definiert ist.

Ausgehend davon, dass das zumindest eine Konvektionsheizgerät die Heizluftströmung vorzugsweise im Bereich der oberen Teilkammer einfördert, sieht die Gestaltung der Heizkammer vor, dass - durch Ausbildung entsprechender Vor- bzw. Rücklaufkanäle im Bereich der Außenränder der Kammer - bereits mit dem einen Konvektionsheizgerät eine optimale Umluftströmung in Form eines Heizkreislaufs erzeugt wird. Die von dem zumindest einen Konvektionsheizgerät ausgehende Heizluftströmung ist mithin als ein umlaufender Heizluft-Strom variabel ausrichtbar. Dieser umlaufende Luftstrom kann unterhalb, oberhalb und innerhalb jeweiliger, die obere Stützfläche der Schublade zum Ablegen der Halbzeuge bildender Bauteile verlagert werden. Dabei ist denkbar, dass der die Halbzeuge erwärmende "Heizkreislauf" durch entsprechende Einstellung des Konvektionsheizgerätes auch in der Strömungsrichtung umschaltbar oder gegenläufig ausgeführt sein kann.

Die erfindungsgemäße Konstruktion weist vorteilhaft Konvektionsheizelemente mit Querstromturbinen auf, die einen Heizkreislauf bilden. Dieser verläuft dabei oberhalb und unterhalb der Ablage in den Teilkammern so, dass jeweils ein zur Querebene der Ablage "paralleler Luftstrom" wirksam ist.

Für einen gleichmäßigen und energiesparend realisierbaren Heizvorgang ist vorgesehen, dass die beiden Konvektionsheizgeräte im Bereich der Leitkanäle eine gleichmäßig verteilte Heizluftströmung erzeugen und dabei eine stetig umlaufende Zirkulationsrichtung aufgebaut wird.

Das vorbeschriebene System kann im Bereich der die Ablage bildenden Schublade dadurch verbessert sein, dass deren die Stützfläche bildenden Bauteile mit einer in vertikaler Richtung zumindest bereichsweise luftdurchlässigen Lochstruktur versehen sind. Damit wird mit geringen Aufwand eine "vertikale" Strömungskomponente zwischen den beiden Teilkammern möglich.

Für eine energiesparende Ausführung des erfindungsgemäße Vorwärmvorgangs ist vorgesehen, dass die Heizkammer im Bereich ihrer - zum Verlagern der Ablage in die jeweilige äußere Bedienstellung erforderlichen - Seitenöffnung mit diese auch in der Öffnungsstellung der Schublade zumindest bereichsweise verschließenden Schließelementen in Form von Pendelplatten o. dgl. Dichtelementen versehen wird. Eine weitere Ausführung des Systems sieht vor, dass der im Kreislauf geführte Heizluftstrom zumindest teilweise mit Frischluft versehen werden kann.

Weitere Einzelheiten und vorteilhafte Ausgestaltungen der Erfindung ergeben sich aus der nachfolgenden Beschreibung und der Zeichnung, in der ein Ausführungsbeispiel der erfindungsgemäßen Formeinrichtung mit Heizkammer näher veranschaulicht ist. In der Zeichnung zeigen:
- Fig. 1: eine perspektivische Gesamtansicht der Formeinrichtung mit aus einer Heizkammer heraus verlagerten Ablage in Form einer Schublade,
- Fig. 2: eine Perspektivdarstellung ähnlich Fig. 1 mit einer Schnittlinie II-II,
- Fig. 3: eine Perspektivdarstellung ähnlich Fig. 1 mit seitlich geöffneter Heizkammer,
- Fig. 4: eine Schnittdarstellung der Formeinrichtung gemäß einer Linie IV-IV in Fig. 1,
- Fig. 5: eine vergrößerte Einzeldarstellung eines im Bereich der Heizkammer vorgesehenen Konvektionsheizgerätes,
- Fig. 6: eine Vorderansicht mit Schnittdarstellung gemäß einer Linie VI-VI in Fig. 4,
- Fig. 7: eine Vorderansicht der mehrteiligen Formeinrichtung gemäß einer Schnittlinie VII-VII in Fig. 4, und
- Fig. 8: eine geschnittene Vorderansicht gemäß einer Linie VIII-VIII in Fig. 4.

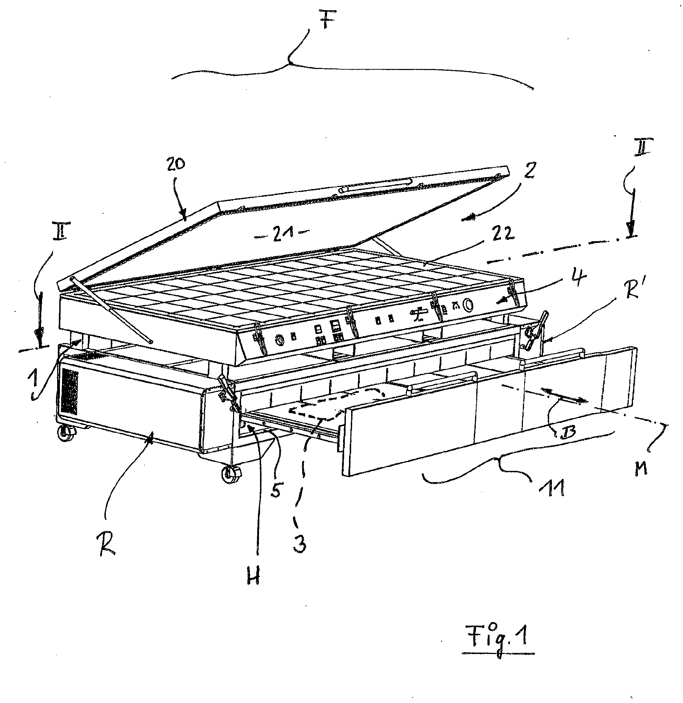

In Fig. 1 ist eine insgesamt mit F bezeichnete Formeinrichtung zum thermischen Umformen von Bauteilen dargestellt. Diese Bauteile werden insbesondere in Form von plattenförmigen Kunststoffen, Mineralwerkstoffen o. dgl. thermoverformbaren Halbzeugen 3 so bereitgestellt, dass aus diesen Halbzeugen 3 jeweilige Badewannen, Duschbecken, Spülbecken, Waschbecken, Waschtische, Verkleidungen, Blenden, Möbelteile, Arbeitsflächen o. dgl. Produkte im Bereich einer Formvorrichtung 2 herstellbar sind. Dazu weist die Einrichtung F im Bereich eines Maschinengestells 1 die in der dargestellten Ausführung oben liegende Formvorrichtung 2 auf, die vorzugsweise in Form einer Vakuumpresse mit entsprechendem Einstellsystem 4 ausgebildet ist. Im Bereich eines schwenkbaren Membranrahmens 20 ist eine elastische Membran 21 vorgesehen, die in Gebrauchslage über jeweilige auf einem Tisch 22 befindliche Werkstücke (nicht dargestellt) gespannt wird.

Diesem Maschinengestell 1 ist bei diesen bekannten Kombinations-Einrichtungen eine beheizbare Schublade als Ablage 11 zugeordnet, die in einer gestellseitig innen liegenden Gebrauchsstellung zur Vorwärmung von Halbzeugen 3 genutzt wird. Aus dieser Gebrauchslage (nicht dargestellt) wird die Ablage 11 zur Entnahme von dann vorgewärmten Halbzeugen 3 in die dargestellte, zumindest bereichsweise neben dem Maschinengestell 1 zugängliche Entnahmestellung verlagert (Fig. 1). Danach erfolgt eine Weiterbearbeitung der vorgewärmten Halbzeuge 3 im Bereich der oberen Formvorrichtung 2.

Das erfindungsgemäß verbesserte Konzept der Formeinrichtung F sieht vor, dass diese nunmehr mit zumindest einer die verlagerbare Ablage 11 aufnehmenden Heizkammer H versehen ist.

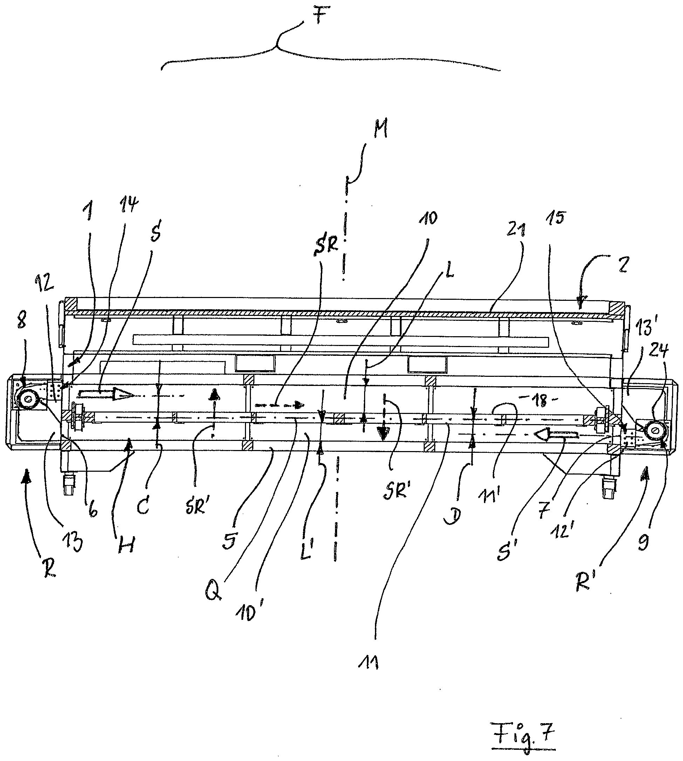

Hierbei wirkt mit dieser speziellen Heizkammer H zumindest eine eine ausrichtbare Heizluftströmung (Pfeil S, S') abgebende Heizeinrichtung R bzw. R' (Fig. 7) zusammen. Ausgehend von der im Bereich der Heizkammer H im Wesentlichen horizontal angeordneten und als Ablage für die Halbzeuge 3 variabel ausführbare Ablage 11 ergibt sich eine optimale Konfiguration dieses Heizkammer-Strömungs-Systems dann, wenn eine obere und eine untere Teilkammer 10, 10' in der "einteiligen" Heizkammer H gebildet werden.

Denkbar ist dabei auch, dass die Ablage 11 im Nahbereich eines Bodens 5 der Heizkammer H angeordnet ist und damit eine entsprechend dem Abstand zur horizontalen Querebene Q große Teilkammern 10 und 10' definiert werden (Pfeil L, L'; Fig. 7).

Für die optimale Beeinflussung des vorgeschriebenen Aufheizprozesses im Bereich der Halbzeuge 3 mittels der Heizluftströmung S, S' ist vorgesehen, dass die zumindest eine Heizeinrichtung R, R' in Form eines Konvektionsheizgerätes 8, 9 ausgeführt wird. Mit der Anordnung des Konvektionsheizgerätes 8, 9 wird erreicht, dass die zumindest eine Heizluftströmung S, S' zumindest bereichsweise oberhalb des auf einer Stützfläche 11' der Ablage 11 befindlichen Halbzeuges 3 in definierbaren Richtungen in die Heizkammer H einbringbar ist.

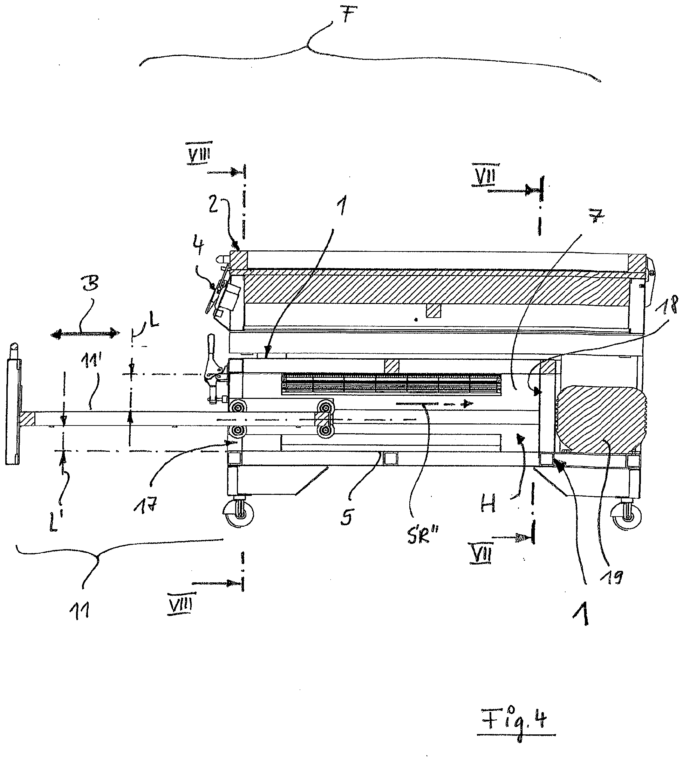

Das erfindungsgemäße System geht prinzipiell davon aus, dass die zumindest eine Heizluftströmung S, S' dabei zumindest eine quer und/oder längs zu einer von der Verlagerungsrichtung B der Ablage 11 definierten Längsmittelebene M ausrichtbare Strömungsrichtung aufweisen kann. Ausgehend von den beiden "primären" Heizluftströmungen gemäß Pfeil S, S' ist eine Anordnung des zumindest einen Konvektions heizgerätes 8, 9 denkbar, mit der eine senkrecht oder parallel zur Stützfläche 11' der Ablage 11 ausrichtbare Strömungsrichtung SR, SR', SR" (Fig. 7, Fig. 4) erzielt werden kann.

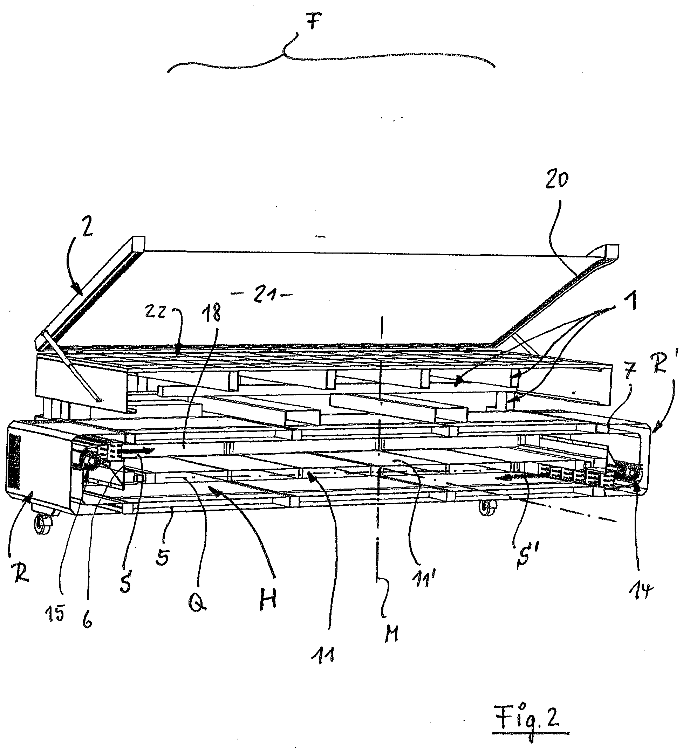

Aus der Schnittdarstellung gemäß Fig. 2 wird die zentrale Lage der Ablage 11 deutlich, wobei diese eine Querebene Q definiert. Daraus ist eine optimale Luftführung des "Heizkreislaufs" ableitbar, dessen Heizluftströmungen S, S' mittels der - mit Querstromturbinen versehenen - Konvektionsheizelemente 8, 9 jeweils parallel zu einer Querebene Q unterhalb und oberhalb der Ablage 11 umlaufend ausrichtbar sind.

Eine konstruktive Weiterentwicklung der Formeinrichtung F im Bereich der Heizkammer H sieht vor, dass diese auch in mehr als die zwei dargestellten und mit dem zumindest einen Konvektionsheizgerät 8, 9 beheizbare Teilkammern 10, 10' unterteilbar ausgeführt sein kann. Dabei ist auch denkbar, dass das zumindest eine jeweilige Teilkammern 10, 10' gerichtete Konvektionsheizgerät 8, 9 wahlweise an das System anschließbar ist. Dabei ist ein modularer Aufbau des Systems aus Maschinenrahmen 1 und Heizkammer H denkbar, wobei das ebenfalls als Modul vorbereitete Konvektionsheizgerät 8, 9 vom Maschinengestell 1 trennbar bzw. anschließbar ist. Dabei sieht die Heizluftführung vor, dass die Beheizung der jeweiligen Teilkammern 10, 10' auch wahlweise vollständig oder teilweise möglich ist; wobei entsprechende Leitklappen (nicht dargestellt) zur Regulierung der Strömungsrichtungen einsetzbar sind.

Ausgehend davon, dass eine Beheizung der Heizkammer H bzw. deren Teilkammern 10, 10' prinzipiell von beliebigen Seitenbereichen der dreiseitig geschlossenen Kammer H aus erfolgen kann, sieht die erfindungsgemäße Konstruktion vor, dass zumindest an einem zur Längsmittelebene M parallelen Außenrand 6, 7 des Maschinengestells 1 das zumindest eine Konvektionsheizgerät 8, 9 angeordnet wird. Dabei ist für die im Bereich der Ablage 11 vorgesehene Heizluftströmung S, S' vorzugsweise die zumindest eine Querrichtung SR (Fig. 7) definiert.

Zum Erreichen eines optimalen "Heizkreislaufs" S, S' der umgewälzten Warmluft ist das zumindest eine Konvektionsheizgerät 8, 9 mit jeweils zumindest einem in die obere bzw. die untere Teilkammer 10, 10' einmündenden Vorlaufkanal 12, 12' sowie einem entsprechend ausmündenden Rücklaufkanal 13, 13' versehen.

Die konstruktiv optimale Umsetzung dieses Luft-Kreislauf-Grundprinzips sieht vor, dass im Bereich der jeweils an das Maschinengestell 1 angrenzenden Außenränder 6, 7 bzw. den parallelen Seitenflächen der Heizkammer H jeweils eines der in die jeweilige Teilkammer 10, 10' einmündenden Konvektionsheizgeräte 8 bzw. 9 angeordnet wird.

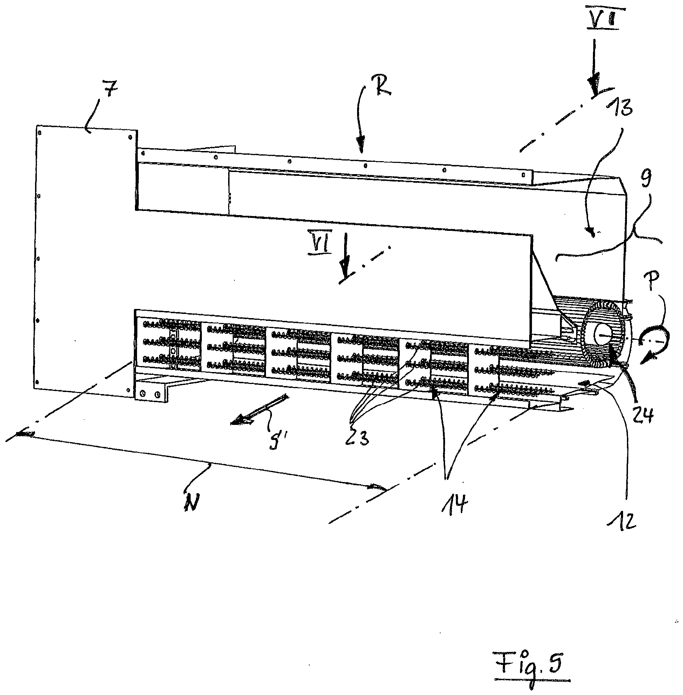

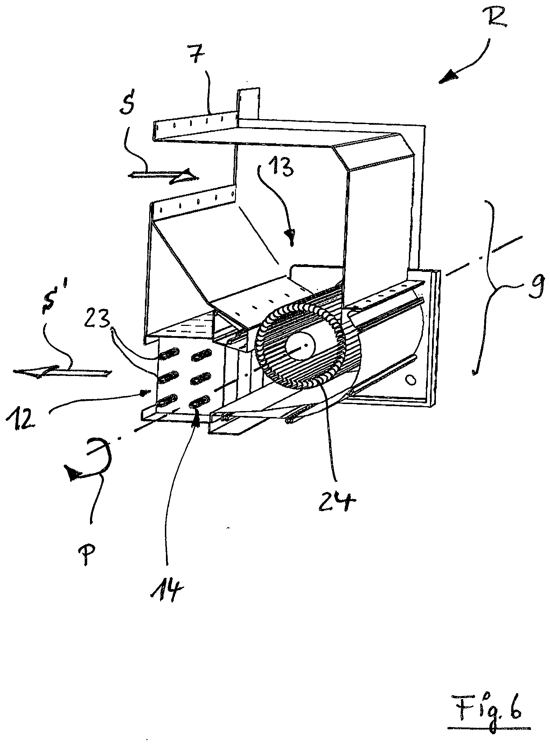

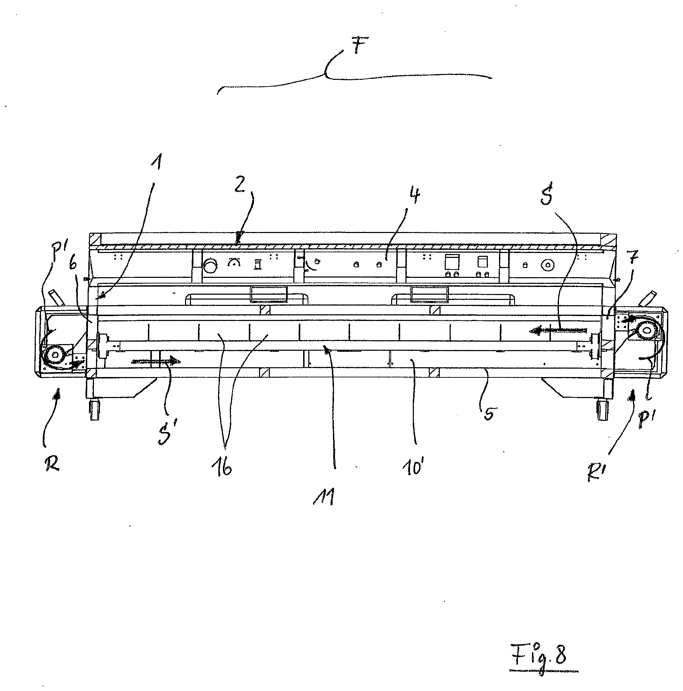

Aus den Darstellungen gemäß Fig. 7 und Fig. 8 wird deutlich, dass die beiden Konvektionsheizgeräte 8, 9 - in Bezug zur Stützfläche 11' bzw. Querebene Q - höhenversetzt unterhalb bzw. oberhalb der Ablage 11 angeordnete Vorlaufkanäle 12, 12' aufweisen. Dabei wird deutlich, dass jeweilige allgemein mit 14 und 15 bezeichnete Heizelemente im Bereich der zur Erzeugung der gerichteten Heizluftströmungen S, S' aus den beiden Konvektionsheizgeräten 8, 9 ausmündenden Vorlaufkanäle 12, 12' (Fig. 5, Fig. 6) vorgesehen sind.

Entsprechend der mit dieser als "Kreislauf" aufgebauten Vorlauf-Rücklauf-Führung mit Leitkanälen 12, 12', 13, 13' werden jeweilige Strömungsrichtungen SR, SR', SR" vorgegeben, so dass die im Wesentlichen im Kreislauf geführte Heizluftströmung S, S' auch im Bereich der jeweiligen Rücklaufkanäle 13, 13' als hier angesaugte Luft den Heizelementen 14, 15 wieder zugeführt wird. Damit kann vorteilhaft eine stetig umlaufende Luftzirkulationsrichtung in der neuartigen Heizkammer H erreicht werden.

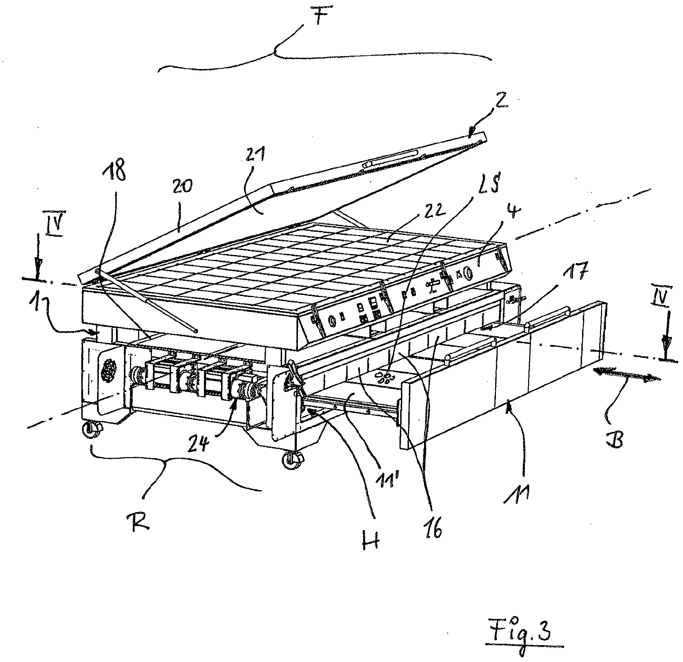

Aus den Darstellungen in Fig. 5 und Fig. 6 wird in Zusammenschau mit Fig. 3 eine Ausführung der Heizrichtung R mit Heizelementen 14 in Form von Heizdrähten oder -wendeln 23 deutlich. Diese sind in mehreren Ebenen über eine Länge N so angeordnet, dass ein in die Vorlaufkanäle 12 eingeleiteter und durch ein Gebläse 24 regelbarer Luftstrom erwärmt wird und in die Strömungsrichtung S' (Fig. 6) in die Heizkammer H eingeblasen wird. Mit der Drehrichtung P des Gebläses 24 ist eine "Kreislaufbewegung" S, S' aktivierbar. In der Ausführung gemäß Fig. 8 ist das System mit Gebläse-Drehrichtung P' ausgeführt.

Eine weitere Ausgestaltung des Systems sieht vor, dass die Ablage 11 im Bereich ihrer Stützfläche 11' mit einer in vertikaler Richtung SR' zumindest bereichsweise durchlässigen Lochstruktur LS versehen wird. Die Verfahrensführung kann auch so aufgebaut werden, dass der vorzugsweise im Kreislauf geführten Heizluftströmung S, S' zumindest in einem Teilbereich der Heizkammer H Frischluft zuführbar ist (nicht dargestellt).

Aus einer Schnittdarstellung in Fig. 4 und der teilweise geöffneten Darstellung in Fig. 3 wird die "geschlossene Heizkammer H" deutlich, die gegenüberliegend der teilweise mit elastischen Schließplatten 16 versehenen Lade-Öffnung 17 mit einer geschlossenen Rückwand 18 versehen ist. Hinter dieser sind auf dem Maschinengestell 1 entsprechende Zusatzgeräte 19 abgestützt (Fig. 4).

## Patentansprüche

1. Formeinrichtung (F) zur thermischen Umformung von Bauteilen, wobei die Einrichtung (F) im Bereich eines Maschinengestells (1) eine Formvorrichtung (2) und eine in einer gestellseitigen Gebrauchsstellung zur Vorwärmung der Halbzeuge (3) beheizbare Ablage (11) aufweist, die zur Entnahme vorgewärmter Halbzeuge (3) in eine zumindest bereichsweise neben dem Maschinengestell (1) zugängliche Entnahmestellung (Pfeil B) verlagerbar ist, wobei die Formeinrichtung (F) mit zumindest einer die Ablage (11) aufnehmenden Heizkammer (H) versehen ist und mit dieser zumindest eine eine ausrichtbare Heizluftströmung (S, S') im Bereich zumindest eines Konvektionsheizgerätes (8, 9) abgebende Heizeinrichtung (R, R') zusammenwirkt, wobei im Bereich der im Wesentlichen horizontal in der Heizkammer (H) angeordneten Ablage (11) zumindest eine obere und eine untere Teilkammer (10, 10') vorgesehen sind und diesen Teilkammern zumindest das eine Konvektionsheizgerät (8, 9) als Heizeinrichtung (R, R') zugeordnet ist und zum Erreichen eines optimalen Heizkreislaufs (S, S') der umgewälzten Warmluft das zumindest eine Konvektionsheizgerät (8, 9) mit jeweils zumindest einem in die obere bzw. die untere Teilkammer (10, 10') einmündenden Vorlaufkanal (12, 12') sowie einem entsprechend ausmündenden Rücklaufkanal (13, 13') versehen ist, wobei im Bereich von jeweils an das Maschinengestell (1) angrenzenden Seitenflächen (6, 7) der Heizkammer (H) jeweils eines der in die jeweilige Teilkammer (10, 10') einmündenden Konvektionsheizgeräte (8, 9) vorgesehen ist, **dadurch gekennzeichnet, dass** die beiden Konvektionsheizgeräte (8, 9) in Bezug zu einer Stützfläche (11') der Ablage (11) höhenversetzt unterhalb und oberhalb der Ablage (11) zu der jeweiligen Teilkammer (10, 10') hin ausmündende Vorlaufkanäle (12, 12') aufweisen, wobei mit diesen als Leitkanäle eine jeweilige Strömungsrichtung (SR) vorgebbar ist und dabei die im Kreislauf geführte Heizluftströmung über jeweilige Rücklaufkanäle (13, 13') ansaugbar ist.

2. Formeinrichtung nach Anspruch 1, **dadurch gekennzeichnet, dass** die Formvorrichtung (2) eine Vakuum-Membranpresse umfasst.

3. Formeinrichtung nach Anspruch 1 oder 2, **dadurch gekennzeichnet, dass** die zumindest eine Heizluftströmung (S, S') zumindest bereichsweise oberhalb des auf der Stützfläche (11') der Ablage (11) befindlichen Halbzeuges (3) in die Heizkammer (H) einbringbar ist und dabei die zumindest eine Heizluftströmung (S, S') zumindest eine quer und/oder längs zu einer von der Ablage (11) definierten Längsmittelebene (M) ausrichtbare Strömungsrichtung (SR, SR") aufweist.

4. Formeinrichtung nach einem der Ansprüche 1 bis 3, **dadurch gekennzeichnet, dass** die Heizluftströmung (S, S') des zumindest einen Konvektionsheizgerätes (8, 9) eine senkrecht oder parallel zur Stützfläche (11') der Ablage (11) ausrichtbare Strömungsrichtung (SR, SR') aufweist.

5. Formeinrichtung nach einem der Ansprüche 1 bis 4, **dadurch gekennzeichnet, dass** die Heizkammer (H) in mehr als die zwei mit zumindest einem Konvektionsheizgerät (8, 9) beheizbare Teilkammern (10, 10') unterteilbar ist.

6. Formeinrichtung nach einem der Ansprüche 1 bis 5, **dadurch gekennzeichnet, dass** das zumindest eine in eine jeweilige Teilkammer (10, 10') gerichtete Konvektionsheizgerät (8, 9) wahlweise an eine oder mehrere der Teilkammer(n) (10, 10') anschließbar oder von dieser(n) trennbar ist.

7. Formeinrichtung nach einem der Ansprüche 1 bis 6, **dadurch gekennzeichnet, dass** das zumindest eine Konvektionsheizgerät (8, 9) an einem zur Längsmittelebene (M) parallelen Außenrand bzw. einer Seitenfläche (6, 7) des Maschinengestells (1) angeordnet ist, derart, dass die im Bereich der Ablage (11) vorgesehene Heizluftströmung (S, S') zumindest die eine Querrichtung definiert.

8. Formeinrichtung nach einem der Ansprüche 1 bis 7, **dadurch gekennzeichnet, dass** die Ablage (11) in Form einer verlagerbaren Schublade ausgestaltet ist.

9. Formeinrichtung nach einem der Ansprüche 1 bis 7, **dadurch gekennzeichnet, dass** die von dem zumindest einen Konvektionsheizgerät (8, 9) ausgehende Heizluftströmung (S, S') als ein umlaufender Heizluft-Strom unterhalb und oberhalb der Stützfläche (11') der Ablage (11) verlagerbar ist, derart, dass das auf der Ablage (11) befindliche Halbzeug (3) mittels eines Heizkreislaufs erwärmbar ist.

10. Formeinrichtung nach einem der Ansprüche 1 bis 9, **dadurch gekennzeichnet, dass** die beiden Konvektionsheizgeräte (8, 9) mit Querstromturbinen versehen sind und mit diesen im Bereich der Leitkanäle eine Heizluftströmung (S, S') mit stetig umlaufender Zirkulationsrichtung definierbar ist.

11. Formeinrichtung nach einem der Ansprüche 1 bis 10, **dadurch gekennzeichnet, dass** die Ablage (11) im Bereich ihrer Stützfläche (11') mit einer in vertikaler Richtung zumindest bereichsweise luftdurchlässigen Lochstruktur (LS) versehen ist.

12. Formeinrichtung nach einem der Ansprüche 1 bis 11, **dadurch gekennzeichnet, dass** der im Kreislauf geführten Heizluftströmung (S, S') zumindest teilweise Frischluft zuführbar ist.

13. Formeinrichtung nach einem der Ansprüche 1 bis 12, **dadurch gekennzeichnet, dass** die Formeinrichtung (F) zur thermischen Umformung von Bauteilen ausgebildet ist, die in Form von plattenförmigen Kunststoffen, Mineralwerkstoffen o. dgl. thermoverformbaren Halbzeugen (3) so bereitgestellt werden, dass aus diesen jeweilige Badewannen, Duschbecken, Spülbecken, Waschbecken, Waschtische, Verkleidungen, Blenden, Möbelteile, Arbeitsflächen o. dgl. Produkte herstellbar sind.

## Claims

1. Moulding apparatus (F) for the thermal shaping of components, the apparatus (F) comprising, in the region of a machine frame (1), a moulding device (2) and a tray (11) which can be heated in a use position on the frame in order to preheat the semi-finished products (3), which tray can be moved into a removal position (arrow B) which can be accessed at least in regions next to the machine frame (1) in order to remove preheated semi-finished products (3), the moulding apparatus (F) being provided with at least one heating chamber (H) which receives the tray (11), and at least one heating apparatus (R, R') which emits an orientable heating air flow (S, S') in the region of at least one convection heater (8, 9) interacting with said heating chamber, at least one upper and one lower partial chamber (10, 10') being provided in the region of the tray (11) arranged substantially horizontally in the heating chamber (H) and at least the one convection heater (8, 9) being associated with these partial chambers as the heating apparatus (R, R'), and, in order to achieve an optimal heating circuit (S, S') of the circulated warm air, the at least one convection heater (8, 9) being provided in each case with at least one supply channel (12, 12') opening into the upper or the lower partial chamber (10, 10') and with a respectively opening return channel (13, 13'), one of the convection heaters (8, 9) which open into the respective partial chambers (10, 10') being provided in the region of lateral surfaces (6, 7) of the heating chamber (H) that are each adjacent to the machine frame (1), **characterised in that** the two convection heaters (8, 9) comprise, offset in height with respect to a support surface (11') of the tray (11), supply channels (12, 12') which open towards the relevant partial chamber (10, 10') below and above the tray (11), it being possible to specify a relevant flow direction (SR) by means of said supply channels as guide channels and it thereby being possible to suck in the heating air flow guided in the circuit via respective return channels (13, 13').

2. Moulding apparatus according to claim 1, **characterised in that** the moulding device (2) comprises a vacuum membrane press.

3. Moulding apparatus according to either claim 1 or claim 2, **characterised in that** the at least one heating air flow (S, S') can be introduced into the heating chamber (H) at least in regions above the semi-finished product (3) located on the support surface (11') of the tray (11), and in so doing the at least one heating air flow (S, S') has at least one flow direction (SR, SR") that can be oriented transversely and/or longitudinally with respect to a central longitudinal plane (M) defined by the tray (11).

4. Moulding apparatus according to any of claims 1 to 3, **characterised in that** the heating air flow (S, S') of the at least one convection heater (8, 9) has a flow direction (SR, SR') which can be oriented perpendicularly or parallel to the support surface (11') of the tray (11).

5. Moulding apparatus according to any of claims 1 to 4, **characterised in that** the heating chamber (H) can be divided into more than the two partial chambers (10, 10') which can be heated by at least one convection heater (8, 9).

6. Moulding apparatus according to any of claims 1 to 5, **characterised in that** the at least one convection heater (8, 9) directed into a relevant partial chamber (10, 10') can be optionally connected to one or more of the partial chamber(s) (10, 10') or separated therefrom.

7. Moulding apparatus according to any of claims 1 to 6, **characterised in that** the at least one convection heater (8, 9) is arranged on an outer edge parallel to the central longitudinal plane (M) or on a lateral surface (6, 7) of the machine frame (1) such that the heating air flow (S, S') provided in the region of the tray (11) defines at least one transverse direction.

8. Moulding apparatus according to any of claims 1 to 7, **characterised in that** the tray (11) is in the form of a movable drawer.

9. Moulding apparatus according to any of claims 1 to 7, **characterised in that** the heating air flow (S, S') emanating from the at least one convection heater (8, 9) can be moved below and above the support surface (11') of the tray (11) as a circulating heating air flow such that the semi-finished product (3) located on the tray (11) can be heated by means of a heating circuit.

10. Moulding apparatus according to any of claims 1 to 9, **characterised in that** the two convection heaters (8, 9) are provided with cross-flow turbines, and a heating air flow (S, S') having a continuously circulating direction of circulation can be defined by said turbines in the region of the guide channels.

11. Moulding apparatus according to any of claims 1 to 10, **characterised in that** the tray (11) is provided, in the region of the support surface (11') thereof, with a hole structure (LS) which is at least partially air-permeable in the vertical direction.

12. Moulding apparatus according to any of claims 1 to 11, **characterised in that** the heating air flow (S, S') guided in the circuit can be supplied at least in part with fresh air.

13. Moulding apparatus according to any of claims 1 to 12, **characterised in that** the moulding apparatus (F) is designed for the thermal shaping of components which are provided in the form of planar plastics materials, mineral materials or similar thermoformable semi-finished products (3) such that bathtubs, shower basins, sinks, wash basins, washstands, cladding, panels, furniture parts, work surfaces or similar products can be produced therefrom.

## Revendications

1. Installation de moule (F) destinée à la déformation thermique de composants, dans laquelle l'installation (F) présente au niveau d'un bâti de machine (1) un dispositif formant moule (2) et un rangement (11), qui peut être chauffé dans une position d'utilisation côté bâti pour préchauffer les produits semi-finis (3) et qui, pour prélever des produits semi-finis (3) préchauffés, peut être déplacé (flèche B) dans une position de prélèvement accessible au moins dans certaines zones à côté du bâti de machine (1), dans laquelle l'installation de moule (F) est dotée d'au moins une chambre de chauffage (H) recevant le rangement (11) et au moins un dispositif de chauffage (R, R') dégageant un écoulement d'air chaud (S, S') orientable au niveau d'au moins un appareil de chauffage par convection (8, 9) coopère avec cette chambre, dans laquelle au niveau du rangement (11) disposé sensiblement de manière horizontale dans la chambre de chauffage (H) au moins une chambre partielle supérieure et une inférieure (10, 10') sont prévues et à ces chambres partielles est associé l'au moins un appareil de chauffage par convection (8, 9) sous forme de dispositif de chauffage (R, R') et, pour obtenir un circuit de chauffage optimal (S, S') de l'air chaud en boucle, l'au moins un appareil de chauffage par convection (8, 9) est doté respectivement d'au moins un canal d'amenée (12, 12') débouchant dans les chambres partielles supérieure et inférieure (10, 10') et d'un canal de retour (13, 13') redébouchant de manière correspondante, dans laquelle il est prévu, au niveau de surfaces latérales (6, 7) de la chambre de chauffage (H) respectivement adjacentes au bâti de machine (1), à chaque fois un des appareils de chauffage par convection (8, 9) débouchant dans la chambre partielle (10, 10') respective, **caractérisée en ce que** les deux appareils de chauffage par convection (8, 9) présentent des canaux d'amenée (12, 12') débouchant vers les chambres partielles respectives (10, 10') par rapport à une surface d'appui (11') du rangement (11) de manière décalée en hauteur en-dessous et au-dessus du rangement (11), dans laquelle une direction d'écoulement (SR) respective peut être prédéfinie avec ces canaux sous forme de canaux d'acheminement et l'écoulement d'air chaud dirigé dans le circuit peut ainsi être aspiré par le biais de canaux de retour respectifs (13, 13').

2. Installation de moule selon la revendication 1, **caractérisée en ce que** le dispositif formant moule (2) comprend une presse à membrane sous vide.

3. Installation de moule selon la revendication 1 ou 2, **caractérisée en ce que** l'au moins un écoulement d'air chaud (S, S') peut être introduit dans la chambre de chauffage (H) au moins dans certaines zones au-dessus du produit semi-fini (3) situé sur la surface d'appui (11') du rangement (11) et ainsi l'au moins un écoulement d'air chaud (S, S') présente au moins une direction d'écoulement (SR, SR") orientable transversalement et/ou longitudinalement par rapport à un plan central longitudinal (M) défini par le rangement (11).

4. Installation de moule selon une des revendications 1 à 3, **caractérisée en ce que** l'écoulement d'air chaud (S, S') de l'au moins un appareil de chauffage par convection (8, 9) présente une direction d'écoulement (SR, SR') orientable perpendiculairement ou parallèlement à la surface d'appui (11') du rangement (11).

5. Installation de moule selon une des revendications 1 à 4, **caractérisée en ce que** la chambre de chauffage (H) peut être divisée en plus de deux chambres partielles (10, 10') qui peuvent être chauffées avec au moins un appareil de chauffage par convection (8, 9).

6. Installation de moule selon une des revendications 1 à 5, **caractérisée en ce que** l'au moins un appareil de chauffage par convection (8, 9) dirigé dans une chambre partielle (10, 10') respective peut être raccordé sélectivement à une ou plusieurs des chambre(s) partielle(s) (10, 10') ou être séparé de celle(s)-ci.

7. Installation de moule selon une des revendications 1 à 6, **caractérisée en ce que** l'au moins un appareil de chauffage par convection (8, 9) est disposé sur un bord extérieur, respectivement aune surface latérale (6, 7) du bâti de machine (1) parallèlement au plan central longitudinal (M) de telle sorte que l'écoulement d'air chaud (S, S') prévu au niveau du rangement (11) définit au moins l'une direction transversale.

8. Installation de moule selon une des revendications 1 à 7, **caractérisée en ce que** le rangement (11) est réalisé sous la forme d'un tiroir mobile.

9. Installation de moule selon une des revendications 1 à 7, **caractérisée en ce que** l'écoulement d'air chaud (S, S') partant de l'au moins un appareil de chauffage par convection (8, 9) peut être déplacé sous la forme d'un courant d'air chaud rotatif en-dessous et au-dessus de la surface d'appui (11') du rangement (11) de telle sorte que le produit semi-fini (3) situé sur le rangement (11) peut être réchauffé à l'aide d'un circuit de chauffage.

10. Installation de moule selon une des revendications 1 à 9, **caractérisée en ce que** les deux appareils de chauffage par convection (8, 9) sont dotés de turbines à courant transversal et un écoulement d'air chaud (S, S') avec une direction de circulation rotative de manière constante peut être défini au niveau des canaux d'acheminement avec ces turbines.

11. Installation de moule selon une des revendications 1 à 10, **caractérisée en ce que** le rangement (11) est doté au niveau de sa surface d'appui (11') d'une structure trouée (LS) poreuse au moins dans certaines zones dans la direction verticale.

12. Installation de moule selon une des revendications 1 à 11, **caractérisée en ce que** de l'air frais peut être alimenté au moins en partie dans l'écoulement d'air chaud (S, S') dirigé dans le circuit de chauffage.

13. Installation de moule selon une des revendications 1 à 12, **caractérisée en ce que** l'installation de moule (F) est destinée à la déformation thermique de composants qui sont préparés sous la forme de matières plastiques, de matériaux minéraux ou de produits semi-finis (3) thermoformables équivalents, en forme de plaque, de manière à pouvoir construire à partir de ceux-ci respectivement des baignoires, des bacs de douche, des éviers, des lavabos, des meubles sous-vasque, des parements, des bandeaux, des éléments de meubles, des plans de travail, ou des produits équivalents.
